# FASCICULE DE BREVET EUROPEEN

(11) **EP 1 579 977 B1**
(45) Date de publication et mention de la délivrance du brevet: **09.05.2007**
(21) Numéro de dépôt: 04447076.3
(22) Date de dépôt: 26.03.2004
(51) Int. Cl.: B29C 47/90

(54) **Dispositif de Calibrage**
Kalibriervorrichtung
Calibration device

(43) Date de publication de la demande: 28.09.2005
(73) Titulaire: Dexsen SA, 4170 Comblain-au-Pont (BE)
(72) Inventeur: Cohen, Jean-Pierre, 4053 Chaudfontaine (BE)
(74) Mandataire: Van Malderen, Michel

(56) Documents cités:
- US-A- 3 923 439
- US-A- 5 630 982
- US-A1- 2003 219 503
- PATENT ABSTRACTS OF JAPAN vol. 2002, no. 02, 2 avril 2002 (2002-04-02) -& JP 2001 287258 A (SEKISUI CHEM CO LTD), 16 octobre 2001 (2001-10-16)

## Description

### Objet de l'invention

Là présente invention se rapporte au domaine de l'extrusion de profilés thermoplastiques et en particulier à un dispositif de calibrage et de refroidissement de tubes et de profilés en matière thermoplastique fondue à la sortie de l'extrudeuse.

### Etat de la technique

Les dispositifs de calibrage pour les tubes en matière thermoplastique extrudée sont très répandus dans le secteur industriel de la mise en oeuvre des matières plastiques et donc bien connus de l'homme de métier.

Parmi les systèmes de calibrage, on distingue les calibrages internes et les calibrages externes. Les calibrages internes nécessitent une tête d'extrusion de configuration particulière pour assurer la circulation interne du liquide de refroidissement dans le poinçon de la filière d'extrusion et sont peu utilisés, surtout pour les tubes de petits diamètres ou un refroidissement est difficile à intégrer. Un tel dispositif est divulgué dans le brevet US 5,296,188.

Les calibrages externes sont réalisés à partir de conformateurs (filières froides) et travaillent soit par calibrage sous vide, soit par calibrage sous pression. Dans les deux cas, om cherche à créer, une surpression relative à l'intérieur du tube afin de coller ses parois encore malléables contre le conformateur. Dans ce procédé, on arrose généralement d'eau le tube à l'entrée du conformateur pour fixer une mince pellicule superficielle sur le tube extrudé et l'aider ainsi à glisser à travers le conformateur. Celui-ci est généralement réalisé en matériau bon conducteur de chaleur et peut être complètement noyé dans l'eau. Il doit avoir une longueur suffisante pour figer la forme du tube et pour empêcher toute déformation de celui-ci à la sortie du dispositif de calibrage. Un tel dispositif est présenté dans les brevets américains US 4,543,051 et US 4,181,487.

La difficulté majeure rencontrée pendant l'opération de calibrage du tube réside dans le fait que lors du lancement de l'extrusion, la filière et le poinçon de l'extrudeuse doivent être ajustés à de nombreuses reprises pour assurer une épaisseur de paroi homogène sur l'ensemble du contour du tube. Ceci entraîne l'obligation d'ajuster, dans la foulée, la position d'alignement du dispositif de calibrage qui doit pouvoir être déplacé dans les trois dimensions de l'espace (x,y,z) et en particulier dans la direction d'extrusion (z) car lors du lancement d'une opération d'extrusion et pour le premier étirage du tube fraîchement extrudé, la tête d'extrusion doit être facilement accessible.

Pour les tubes de petite taille devant être produites dans des domaines de tolérance très étroits, le dispositif de calibrage doit pouvoir être déplacé selon les trois axes (x,y,z) afin de pouvoir dégauchir celui-ci par rapport à la direction de l'axe de la filière d'extrusion, l'axe z.

La difficulté essentielle rencontrée parmi les dispositifs de l'état de la technique réside dans le fait que pour procéder au déplacement dans les trois directions évoqué plus haut, il faut chaque fois déplacer l'ensemble du bac de refroidissement/calibrage dans la mesure ou le conformateur n'a aucune possibilité de déplacement autonome par rapport à ce bac, or celui-ci peut avoir des dimensions considérables ce qui rend l'opération délicate et relativement imprécise. Ceci nécessite alors des dispositifs d'ajustement de l'ensemble du bac relativement lourds et donc d'un maniement délicat. Les dispositifs d'ajustement sont typiquement constitués d'un ensemble de crémaillères et de vis et écrous pour effectuer des mouvements de réglage dans toutes les directions.

Les réservoirs de calibrage et de refroidissement a l'eau opérant avec un vide relatif sont bien connus de l'homme de métier. Un tel dispositif est présenté dans le brevet américain US 5,464,335. Ce dispositif est particulièrement adapté pour des tubes de petite taille et propose une solution pour minimiser les turbulences de l'eau de refroidissement. La figure 1 de ce document montre les différentes manivelles nécessaires au déplacement de l'ensemble refroidissement et calibrage sous vide dans les trois directions de l'espace. Le conformateur est totalement solidaire du bain de refroidissement et ne dispose d'aucun moyen de positionnement autonome.

Le brevet américain US 5,340,295 propose un ensemble semblable présentant à nouveau un conformateur totalement solidaire du restant du bac de calibrage sous vide. Ce document propose une solution pour la régulation du vide à l'intérieur du bain de calibrage par l'intermédiaire d'une pompe à vide à vitesse variable.

Un procédé d'ajustage de la position d'une chambre de calibrage dans son ensemble est également décrit dans le brevet américain 5,630,982. Ce document divulgue schématiquement une méthode et un dispositif de calibrage asservi par un système de mesure basé sur l'ultrason.

### Buts de l'invention

La présente invention vise à fournir un conformateur dont la position est réglable indépendamment de la position du bac de calibrage selon les axes perpendiculaires à la direction d'extrusion.

### Résumé et éléments caractéristiques de l'invention

La présente invention divulgue un dispositif de calibrage pour l'extrusion de tubes ou de profilés en matière thermoplastique comportant un bac de calibrage avec un moyen de conformation, une chambre de refroidissement avec des moyens d'alimentation en eau et une chambre sous vide, caractérisé en ce que ledit moyen de conformation comprend selon les deux axes x et y au moins un moyen d'ajustement de position indépendant des moyens d'ajustement de position du bac de calibrage selon ces mêmes axes x et y, pour faciliter le dégauchissement dudit moyen de conformation par rapport à la direction d'extrusion z. Ceci permet au réglage du conformateur de ne plus être tributaire du réglage du bac.

Avantageusement, ladite chambre de refroidissement est reliée à ladite chambre sous vide par des moyens de connexion flexibles. Ces moyens permettant au mouvement du conformateur de se découpler du mouvement du bac au moins selon les directions x et y.

Selon un mode d'exécution préféré de l'invention, lesdits moyens de connexion flexibles sont des tuyaux en caoutchouc. De préférence, ces tuyaux seront renforcés pour résister au vide partiel qui règne à l'intérieur du système.

De préférence, ledit moyen de conformation comprend un conformateur et un porte-conformateur.

Dans un mode d'exécution préféré de l'invention, ledit porte-conformateur est transparent.

Toujours selon l'invention, ledit porte-conformateur constitue l'enveloppe de la chambre de refroidissement.

Selon une réalisation particulière du dispositif de l'invention, ledit moyen d'ajustement des moyens de conformation comporte un réglage micrométrique et des indexations.

De manière avantageuse, ledit bac de calibrage comprend en outre des moyens de déplacement selon la direction d'extrusion z. Ceci est surtout important pour pouvoir écarter le système de calibrage lors du démarrage de l'extrudeuse.

Parallèlement, ledit bac de calibrage comporte en outre un bac de refroidissement et de séchage pour achever la fabrication du tube ou du profilé.

La présente invention divulgue en outre un procédé de calibrage d'un tube ou d'un profilé en matière thermoplastique extrudé et calibré par un dispositif de calibrage selon la revendication 1 caractérisé en ce que l'on ajuste la position dudit moyen de conformation de façon indépendante par rapport à la position du bac de calibrage.

Enfin, l'invention propose l'utilisation du dispositif de calibrage selon la revendication 1 pour le calibrage de tubes de petite section, par exemple à usage médical, ou de profilés.

### Brève description des figures

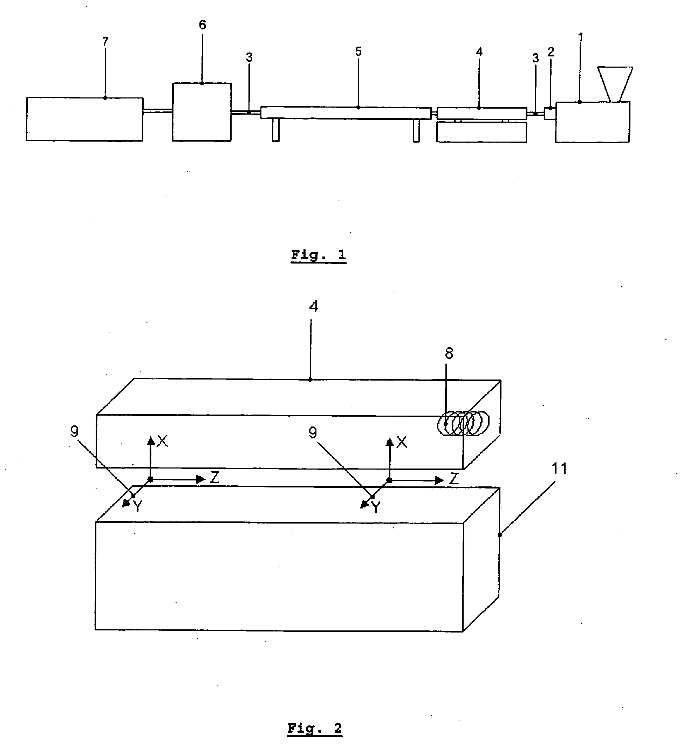

La figure 1 représente une vue schématique d'une ligne d'extrusion de tubes ou de profilés avec un bac de calibrage, un bain de refroidissement, un système de tirage et une installation de réception selon l'état de la technique.

La figure 2 représente une vue schématique d'un bac de calibrage conventionnel comprenant un conformateur fixé sur ledit bac et des moyens de réglage de la position du bac calibreur dans son ensemble selon les trois axes x,y et z.

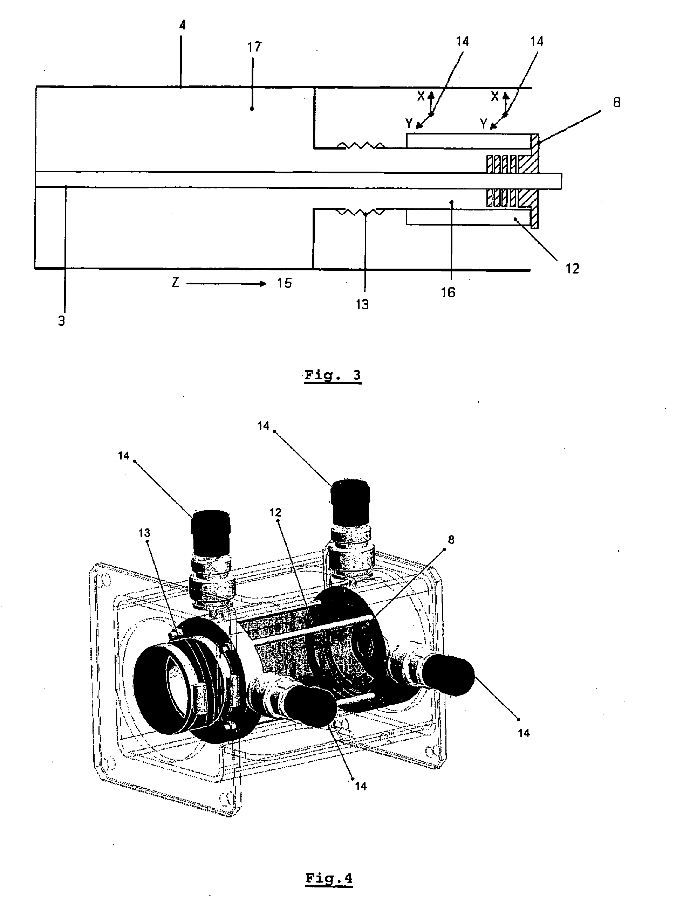

La figure 3 représente une vue schématique du dispositif de calibrage selon l'invention avec un conformateur muni de moyens de déplacement selon l'axe x et y, indépendants de la position du bac calibreur.

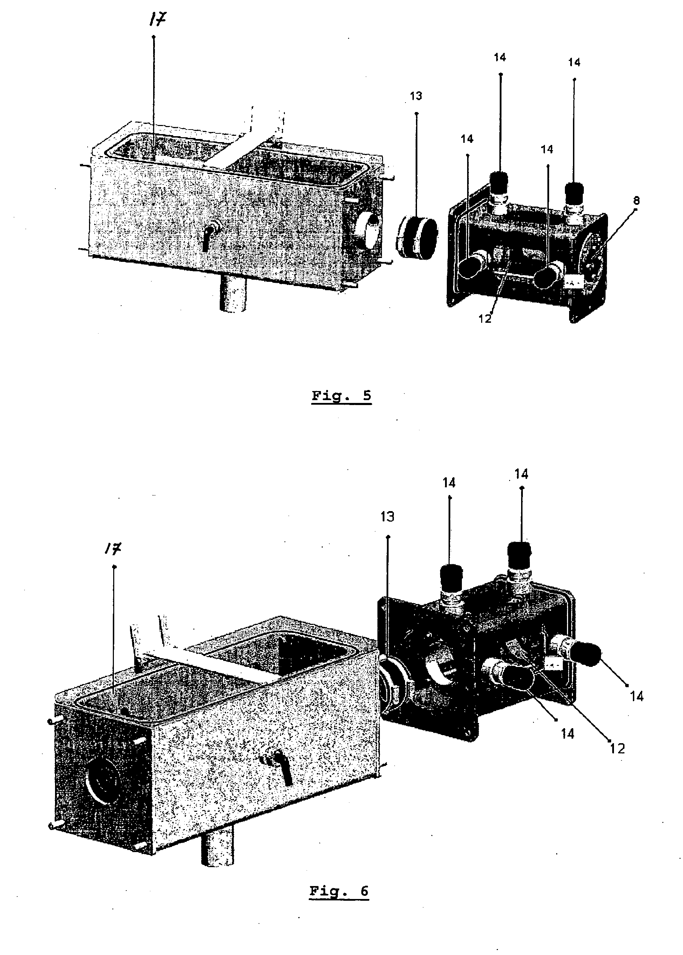

La figure 4 représente un schéma de détail d'un conformateur positionné dans un porte-conformateur munis de moyens de réglage selon l'axe x et y.

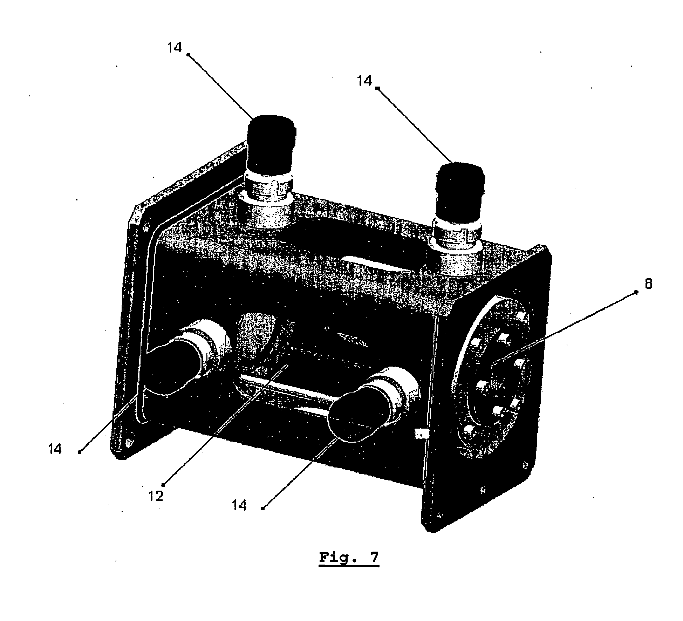

La figure 5 représente une vue éclatée en perspective d'une réalisation du dispositif selon l'invention.

La figure 6 représente une seconde vue éclatée en perspective d'une réalisation du dispositif selon l'invention.

La figure 7 représente une troisième vue éclatée en perspective d'une réalisation du dispositif selon l'invention.

### Description détaillée de l'invention

L'invention présente un dispositif de calibrage amélioré en ce sens qu'il permet un ajustement radial du conformateur 8, c'est à dire selon les axes x et y perpendiculaires à la direction d'extrusion. L'ajustement dans le sens de l'extrusion, selon l'axe z, c'est à dire d'avant en arrière continuant à se faire de manière classique.

Ce système présente plusieurs avantages, le premier de ces avantages étant une augmentation considérable de la précision du réglage du conformateur 8 qui peut maintenant être ajusté de façon indépendante alors que le bac de calibrage 4 reste bien aligné dans le sens d'extrusion z du tube ou du profilé. Ceci se répercute bien entendu directement sur la complexité de construction du bac de calibrage 4 qui ne nécessite plus dorénavant des moyens complexes de déplacement 9 selon les axes x,y et z puisqu'on peut se contenter dorénavant de déplacer uniquement le conformateur 8 pour le réglage et l'ajustage des épaisseurs de paroi des tubes extrudés.

Le calibrage sous vide, bien connu de l'homme de métier avait amené celui-ci à concevoir des dispositifs de calibrages comportant des conformateurs fixes pour des raisons d'étanchéité. Le problème de l'étanchéité à été surmonté dans le cadre de la présente invention en reliant le porte conformateur 12 à l'installation sous vide par un moyen de liaison souple 13 pouvant absorber les légers mouvements dus à l'ajustement du conformateur 8. Ces moyens de liaison souples peuvent être des gaines de caoutchouc ou tout autre moyen présentant à la fois la rigidité nécessaire pour résister au vide partiel généré dans ce type d'installation et en même temps suffisamment souples pour absorber les mouvements relatifs du porte conformateur 12 selon les axes perpendiculaires x et y à la direction d'extrusion z.

### Légende

- 1.: Extrudeuse
- 2.: Tête d'extrusion
- 3.: Tube ou profilé extrudé
- 4.: Bac de calibrage
- 5.: Bac de refroidissement séchage
- 6.: Tirage
- 7.: Réception (Machine de coupe ou enrouleur)
- 8.: Conformateur
- 9.: Système de réglage de position

- 11.: Bâti du bac de calibrage (Partie fixe)
- 12.: Porte conformateur mobile formant l'enveloppe de la chambre de refroidissement
- 13.: Moyen de connexion flexible
- 14.: Réglage de position radiale
- 15.: Réglage de position axiale
- 16.: Chambre de refroidissement
- 17.: Chambre sous vide partiel

## Revendications

1. Dispositif de calibrage pour l'extrusion de tubes ou de profilés en matière thermoplastique comportant un bac de calibrage (4) avec un moyen de conformation (8,12), une chambre de refroidissement (16) avec des moyens d'alimentation en eau et une chambre sous vide (17), **caractérisé en ce que** ledit moyen de conformation (8,12) comprend selon les deux axes x et y au moins un moyen d'ajustement de position (14) indépendant des moyens d'ajustement de position (9) du bac de calibrage (4) selon ces mêmes axes x et y, pour faciliter le dégauchissement dudit moyen de conformation (8,12) par rapport à la direction d'extrusion z.

2. Dispositif de calibrage selon la revendication 1 **caractérisé en ce que** ladite chambre de refroidissement (16) est reliée à ladite chambre sous vide (17) par des moyens de connexion flexibles (13).

3. Dispositif de calibrage selon la revendication 2 **caractérisé en ce que** lesdits moyens de connexion flexibles (13) sont des tuyaux en caoutchouc.

4. Dispositif de calibrage selon la revendication 1 **caractérisé en ce que** ledit moyen de conformation comprend un conformateur (8) et un porte-conformateur (12).

5. Dispositif de calibrage selon la revendication 4 **caractérisé en ce que** ledit porte-conformateur (12) est transparent.

6. Dispositif de calibrage selon la revendication 4 **caractérisé en ce que** ledit porte-conformateur (12) constitue l'enveloppe de la chambre de refroidissement (16).

7. Dispositif de calibrage selon la revendication 1 **caractérisé en ce que** les ledit moyen d'ajustement (14) des moyens de conformation (8,12) comporte un réglage micrométrique et des indexations.

8. Dispositif de calibrage selon la revendication 1 **caractérisé en ce que** ledit bac de calibrage (4) comprend en outre des moyens de déplacement (15) selon la direction d'extrusion z.

9. Dispositif de calibrage selon la revendication 1 **caractérisé en ce que** ledit bac de calibrage (4) comporte en outre un bac de refroidissement et de séchage (5).

10. Procédé de calibrage d'un tube ou d'un profilé en matière thermoplastique extrudé (3) et calibré par un dispositif de calibrage selon la revendication 1 **caractérisé en ce que** l'on ajuste la position dudit moyen de conformation (8,12) de façon indépendante par rapport à la position du bac de calibrage (4).

11. Utilisation du dispositif de calibrage selon la revendication 1 pour le calibrage de tubes de petite section, par exemple à usage médical, ou de profilés.

## Claims

1. Calibration device for the extrusion of tubes or profiles in thermoplastic material comprising a calibration tank (4) with a sizing means (8,12), a cooling chamber (16) with a water-supply means (16) and a vacuum chamber (17), **characterised in that** said sizing means (8,12) comprises along the two axes x and y at least one position-adjustment means (14) that is independent of the position-adjustment means (9) of the calibration tank (4) along these same axes x and y, so as to facilitate the surfacing of said sizing means (8,12) relative to the extrusion direction z.

2. Calibration device according to Claim 1, **characterised in that** said cooling chamber (16) is connected to said vacuum chamber (17) by flexible connection means (13).

3. Calibration device according to Claim 2, **characterised in that** said flexible connection means (13) are rubber hoses.

4. Calibration device according to Claim 1, **characterised in that** said sizing means comprises a shaper (8) and a shaper holder (12).

5. Calibration device according to Claim 4, **characterised in that** said shaper holder (12) is transparent.

6. Calibration device according to Claim 4, **characterised in that** said shaper holder (12) forms the casing of the cooling chamber (16).

7. Calibration device according to Claim 1, **characterised in that** said adjustment means (14) of the sizing means (8,12) comprises micrometer-scale adjustment and indexations.

8. Calibration device according to Claim 1, **characterised in that** said calibration tank (4) also comprises a displacement means (15) along the extrusion direction z.

9. Calibration device according to Claim 1, **characterised in that** said calibration tank (4) also comprises a cooling and drying tank (5).

10. Method for calibrating a tube or profile in extruded thermoplastic material (3) and calibrated by a calibration device according to Claim 1, **characterised in that** the position of said sizing means (8,12) is independently adjusted relative to the position of the calibration tank (4).

11. Use of the calibration device according to Claim 1 for calibrating tubes with a small cross-section, for example for medical use, or profiles.

## Patentansprüche

1. Kalibriervorrichtung für die Extrusion von Rohren oder Profilen aus thermoplastischen Werkstoffen, die eine Kalibrierwanne (4) mit einem Formgebungsmittel (8,12), eine Kühlkammer (16) mit Mitteln zur Wasserzuführung und eine Vakuumkammer (17) umfasst, **dadurch gekennzeichnet, dass** das besagte Formgebungsmittel (8,12) mindestens ein Positionsregelungsmittel (14) gemäß der X- und der Y-Achse umfasst, das unabhängig von den Positionsregelungsmitteln (9) der Kalibrierwanne (4) gemäß derselben X- und Y-Achse ist, um das Ausrichten des besagten Formgebungsmittels (8,12) in Bezug auf die Extrusionsrichtung z zu vereinfachen.

2. Kalibriervorrichtung nach Anspruch 1, **dadurch gekennzeichnet, dass** die besagte Kühlkammer (16) mit der besagten Vakuumkammer (17) durch flexible Verbindungsmittel (13) verbunden ist.

3. Kalibriervorrichtung nach Anspruch 2, **dadurch gekennzeichnet, dass** die besagten flexiblen Verbindungsmittel (13) Gummirohre sind.

4. Kalibriervorrichtung nach Anspruch 1, **dadurch gekennzeichnet, dass** das besagte Formgebungsmittel ein Formwerkzeug (8) und einen Formwerkzeugträger (12) umfasst.

5. Kalibriervorrichtung nach Anspruch 4, **dadurch gekennzeichnet, dass** der besagte Formwerkzeugträger (12) transparent ist.

6. Kalibriervorrichtung nach Anspruch 4, **dadurch gekennzeichnet, dass** der besagte Formwerkzeugträger (12) die Hülle der Kühlkammer (16) bildet.

7. Kalibriervorrichtung nach Anspruch 1, **dadurch gekennzeichnet, dass** das besagte Positionsregelungsmittel (14) der Formgebungsmittel (8,12) eine Mikrometereinstellung und Indexierungen umfasst.

8. Kalibriervorrichtung nach Anspruch 1, **dadurch gekennzeichnet, dass** die besagte Kalibrierwanne (4) außerdem Mittel zur Verschiebung (15) in Extrusionsrichtung z umfasst.

9. Kalibriervorrichtung nach Anspruch 1, **dadurch gekennzeichnet, dass** die besagte Kalibrierwanne (4) außerdem eine Kühl- und Trocknungswanne (5) umfasst.

10. Kalibrierverfahren für ein Extrusionsrohr oder -profil aus thermoplastischem Werkstoff (3), das durch eine Kalibriervorrichtung nach Anspruch 1 kalibriert wurde, **dadurch gekennzeichnet, dass** man die Position des besagten Formgebungsmittels (8,12) unabhängig von der Position der Kalibrierwanne (4) regelt.

11. Verwendung der Kalibriervorrichtung nach Anspruch 1 für die Kalibrierung von Rohren mit kleinem Querschnitt, zum Beispiel für medizinische Anwendungen, oder von Profilen.
